# EUROPÄISCHE PATENTSCHRIFT

(11) **EP 3 237 682 B1**
(45) Veröffentlichungstag und Bekanntmachung des Hinweises auf die Patenterteilung: **01.07.2020**
(21) Anmeldenummer: 15791241.1
(22) Anmeldetag: 22.09.2015
(51) Int. Cl.: E01C 9/00, E01C 3/00

(54) **WASSERDURCHLÄSSIGES BODENGITTER FÜR PFLASTERUNGEN**
PERMEABLE FLOOR GRATING FOR PAVING
CAILLEBOTIS PERMÉABLE POUR PAVAGES

(30) Priorität: 28.12.2014 DE 202014106285 U
(43) Veröffentlichungstag der Anmeldung: 01.11.2017
(73) Patentinhaber: Purus Plastics GmbH, 95659 Arzberg (DE)
(72) Erfinder: BARTH, Andree, 95509 Marktschorgast (DE); MANZEI, Jürgen, 95615 Marktredwitz (DE)
(74) Vertreter: Neidl-Stippler, Cornelia
(86) Internationale Anmeldenummer: PCT/DE2015/100398
(87) Internationale Veröffentlichungsnummer: WO 2016/107621

(56) Entgegenhaltungen:
- WO-A1-2010/102614
- DE-A1-102004 060 822
- DE-A1-102006 052 286
- DE-U1- 9 208 359
- DE-U1-202005 015 107
- JP-A- H1 068 101
- US-A1- 2003 136 070

## Beschreibung

Die vorliegende Erfindung betrifft ein Kunststoff-Mehrzweckbauteil, das geeignet ist, mit Formkörpern, wie Steinen, gefüllt zu werden und in einem aus mehreren Bauteilen bestehenden flächigen Verbund verlegt zu werden.

Derartige Bauteile sind bereits aus der EP0576939 (B1) bekannt, auf deren Offenbarung zur Vermeidung von Wiederholungen in vollem Umfang Bezug genommen wird. Dort wird ein Mehrzweckbauteil beschrieben, welches einen umlaufenden Aussenrahmen aufweist, an dessen Seitenflächen jeweils mindestens eine Kupplungseinrichtung zur Verbindung zweier benachbarter Bauteile vorgesehen sind, dass sowohl Quer- als auch Längswände vorgesehen sind, die das Innere des Aussenrahmens in ein Raster einzelner zellenartiger Durchführungen aufteilen.

Das Mehrzweckbauteil wurde gleichsam als Baustein eines Baukastensystems verwendet, wobei es unterschiedlichsten Einsatzzwecken zugänglich ist. Das Bauteil kann als Bestandteil einer Begrünung, insbesondere als Weg oder begehbare Fläche in begrünten Flächen ohne besondere Gründung oder Kiesbett, wie bspw. eines Parkplatzes, Turnierplatzes, Arbeitsfläche, Sportplatzes oder dgl. verwendet werden. Hierzu wird das Bauteil z.B. auf dem Untergrund installiert und anschließend mit Substrat gegebenenfalls auch teilweise mit Pflanzelementen gefüllt und verlegt. Innenwände in Verbindung mit dem Aussenrahmen bewirken eine hohe Steifigkeit des Bauteils und damit eine besonders gute Trittfestigkeit. Desweiteren kann das Bauteil ebenso gut auch als Teil einer Strassengrabenseitenbefestigung oder Wallbepflanzung dienen, wobei eine Wegsacken und Unterspülung oder Abspülung im Trittbereich wirksam vermieden wird.

Das bekannte Bauteil ist für unterschiedliche Zwecke einsetzbar - bspw. als Bodenstabilisierung für Sportplätze, Parkplätze, Runways, Parks - aber auch für Abhänge und andere Steillagen. Es ermöglicht dabei eine schnelle Verlegung ohne aufwändigen Unterbau, die in vielen Fällen völlig ausreicht. Es kann aber auch auf einem Unterbau eingesetzt werden. Es ist begrünbar.

Um eine begehbare oder befahrbare Fläche zu erzeugen, ist bei bekannten Bauteilen vorgesehen, dass die Längs- und Querwände zumindest mit der Oberseite, welche die begehbare Fläche bildet, mit dem Rahmen bündig abschließen. Es ist auch günstig, wenn die Oberfläche der Stege nicht glatt ist, um Ausrutschen auf diesen zu vermeiden. So können bspw. Noppen auf der Oberfläche vorgesehen sein. Die besondere Kupplungseinrichtung besitzt u.a. den Vorteil, dass sie während des Formgebungsvorgangs bereits miteingeformt werden kann und gleichzeitig eine besonders einfache Möglichkeit der Verbindung einzelner Bauteile miteinander gewährleistet. Es ist lediglich notwendig, zwei Bauteile an ihren gemeinsamen Seitenflächen am jeweiligen Hakenteil und der Durchführung zusammenzustecken.

Eine besonders gute Trittfestigkeit oder Befahrfestigkeit bei Belastung der Verbindungsstellen zweier Bauteile wird dadurch gewährleistet, dass zumindest die Unterseite des Hakenteils mit der Unterseite des Aussenrahmens bündig abschließt.

Das bekannte Bauteil war jedoch nur für Zwecke der Bodensicherung ausgelegt. Es ist aber häufig erwünscht, gepflasterte/geflieste Flächen mit Rasengittern abwechselnd zu verlegen und Versiegelung der Fläche zu vermeiden. Dabei ist erwünscht, dass Feuchtigkeit schnell abfließt - bspw. entstehen so trockene Pflasterungen, über die problemlos gelaufen werden kann und auf denen sich kein Eisfilm oder Biofilm bildet. Bei der Verwendung in Bereichen mit zeitweilig hohem Regenaufkommen soll einmal aufgebrachte Nässe möglichst sofort versickert und somit die wertvolle Krume nicht weggeschwemmt und so der Versiegelung des Bodens entgegengewirkt werden.

Aus DE 20 2005 015 107 U1 ist eine Gitterplatte mit mehreren Füllkammern bekannt, wobei eine Vielzahl von Gitterplatten mit Steckverbindungen an ihren Seitenwänden zu einer befahrbaren oder begehbaren Fläche zusammenstellbar ist. Die Steckverbindungen sind durch gegenüber den Seitenwänden vorstehenden Vorsprüngen und dazwischen vorgesehenen Vertiefungen gebildet. Durch die mäanderförmige Gestaltung der Vorsprünge und der korrespondierend ausgebildeten Vertiefungen in den Seitenwänden können die Gitterplatten in einfacher Weise aneinander gefügt werden, um so einen gegenseitigen Verbund zu bilden. Hierdurch ergibt sich zwar eine besonders bequeme und einfache Verlegung sowie eine hohe Tragfähigkeit, jedoch können die bspw. im Laufe eines Tages durch Sonneneinstrahlung und Schatten auftretenden Ausdehnungsunterschiede nicht ausgeglichen werden. Aufgabe der vorliegenden Erfindung ist es, das gattungsgemässe Bauteil so zu verbessern, dass die Nachteile von Bauteilen des Standes der Technik vermieden werden.

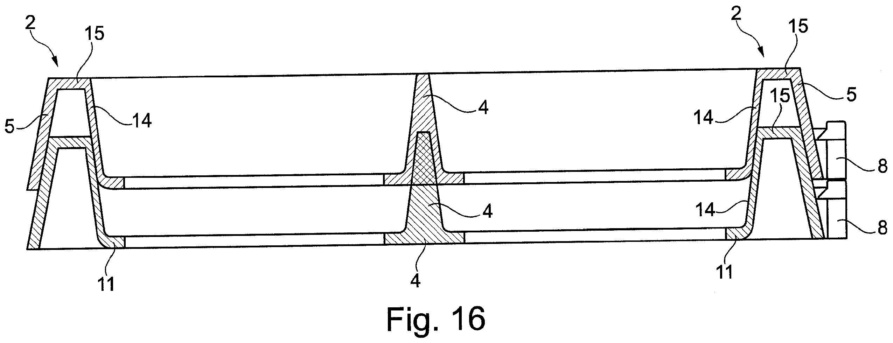

Die Aufgabe wird erfindungsgemäss durch ein gattungsgemässes Bauteil mit den Merkmalen des Anspruches 1 gelöst. Die erfindungsgemäßen Bauteile können zu transportfähigen Stapeln zusammengestellt werden, wobei die Doppelwände ineinandergreifen und derart die Bauteile gut gestapelt, in dieser Weise transportiert und vor Ort durch Verbindung als Bauteilverbunde ausgelegt werden können. Durch die konisch zulaufenden Seitenwände der hohlen Doppelwand-Außenrahmenteile, können die Bauteile leicht übereinander gestapelt werden (s. Fig. 16) und eine hohe Elastizität der Bauteile bei Ausdehnung in der Wärme ist gegeben. Das Mehrzweckbauteil kann mit Formkörpern wie Pflastersteinen, Betonformsteinen, Kunststeine, Holzpflaster etc. - ggf. mit Beleuchtungseinrichtung - gefüllt werden. Vorteilhafte Weiterbildungen ergeben sich aus den abhängigen Ansprüchen.

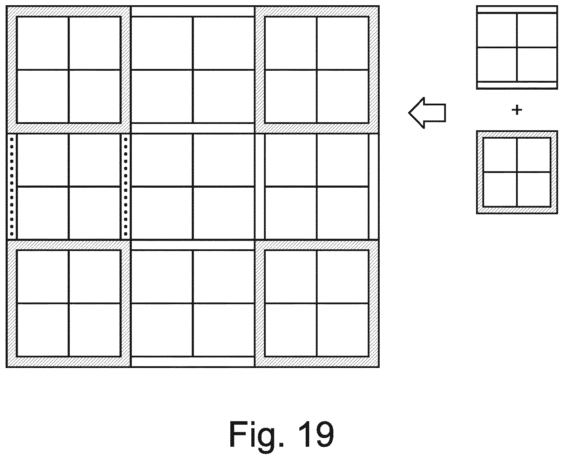

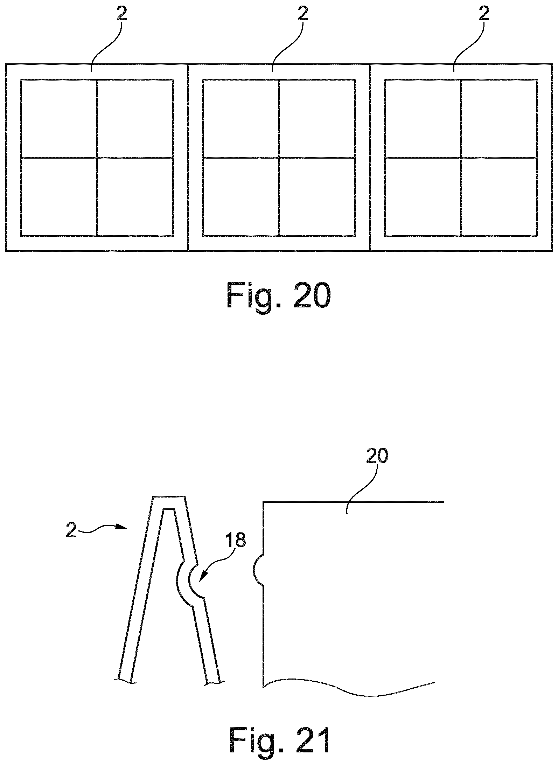

Dabei können die Mehrzweckbauteile sowohl einen umlaufenden Doppelwand-Außenrahmen besitzen, wodurch bei verlegten Flächen doppelte Doppelwand-Strukturen (s. Fig. 20) entstehen, es ist aber auch möglich, die Mehrzweckbauteile nur teilweise mit Doppelwand-Außenrahmenteilen zu versehen, so dass beim Zusammenbau nur eine Doppelwandstruktur zwischen zwei Bauteilen entsteht (s.Fig.19).

Durch die Verwendung der Haken/Durchführungskombination an den Außenflächen der Mehrzweckbauteile kann dadurch, dass ggf. eine Ausnehmung im Außenrahmen im Bereich der Innenseite einer Außenrahmenaußenwand vorgesehen ist, der Verriegelungshaken in ein Doppelwand- Außenraumenteil eingebracht werden und trotzdem eine glatte Innenwand erhalten werden.

Falls notwendig, kann die Außenrahmen-Innenwand ein Fenster zur Aufnahme des Verriegelungshakens aufweisen, über dieses hinaus soll der Verriegelungshaken aber einen Vorsprung auf der Innenseite der Außenrahmeninnenwand bilden, denn es wird eine möglichst glatte Innenwand für gutes Einbringen des Füllmaterials gewünscht.

Das Mehrzweckbauteil eignet sich für vorübergehende und permanente Befestigung von Flächen und Wegen, wie bei Ereignissen, die in landwirtschaftlichem Gelände durchgeführt werden (Polospiele, Reiterspiele, Golf), Parkplätzen u. dgl. - auch ohne entsprechend aufwändige Untergrundsvorbereitung (Sandbett, Kiesschüttung etc.) Es kann ggf. auch teilweise mit Pflanzeinheiten versehen werden. Durch die Ausbildung von Durchlässen in der Doppelwänden und keine vollflächige Abstützung des Füllmaterial am Boden des Teils durch den Auflagebodenrahmen kann ein sehr gutes Entwässerungsverhalten verglichen mit den üblichen asphaltierten und versiegelten Flächen erzielt werden. Die Doppelaußenwände aus (elastischem) Kunststoff ermöglichen noch dazu ein elastisches Verhalten des gesamten Bauteils, da sie zusammengedrückt und ggf. auch auseinandergezogen werden können. Dadurch können thermische Spannungen sowie mechanische Lasten der verlegten Platten aufgenommen werden. So dehnt sich eine Polyethylen- Kunststoffplatte mit ca 33 cm Seitenlänge in der Sonne um 2 - 3 mm aus - bei großen Flächen führt das ohne Spannungsausgleich zu Aufwölbungen und Brechen der Befestigungsplatten.

Es ist also wesentlich, die bspw. im Laufe eines Tages durch Sonneneinstrahlung und Schatten auftretenden Ausdehnungsunterschiede in jeder Richtung auszugleichen, ohne dass das verlegte Gitter sich wellt oder reißt. Die Außenrahmen-Doppelwände dienen somit als Ausdehnungs- und Biegereserve. So ähnelt ihre Elastizität natürlichem Erdreich. Gerade auf gepflasterten Abstellplätzen oder Wegen ist ein derartiges Verhalten erwünscht, um eine permanente Verlegung zu gewährleisten. Es ist auch möglich, elastische Trittsteine - bspw. aus Polyurethan oder Kork, als Füllung einzusetzen und somit gelenkschonendes Betreten der Flächen zu ermöglichen.

Eine weitere Möglichkeit ist, leuchtende Steine - entweder mit phosphoreszierendem Material versetzt oder mit LED versehen - einzusetzen und dadurch nachts die erwünschte Richtung anzuzeigen. Genauso können bunte Formkörper verschiedenster Farben oder bedruckt eingebracht werden, welche der Kennzeichnung oder Werbung dienen können.

Das Bauteil lässt sich leicht aus Kunststoffen gießen, wobei die Konstruktion des Bauteils dergestalt ist, dass Rohkunststoffe, aber auch eingemahlene sowie eingeschmolzene Kunststoffabfälle gegebenenfalls in Verbindung mit zusätzlichen Bestandteilen einfach gespritzt oder gegossen werden können. Das Bauteil kann demzufolge einen aktiven Beitrag an der Entsorgung von Kunststoffabfällen leisten, welche beispielsweise durch falsche Einfärbungen in Spritzgussbetrieben regelmäßig in großen Mengen anfallen. Eine vollständige Aufbereitung von Massen-Kunststoffabfällen (z.B. Verpackungsmaterial Säcken, Schrumpfhauben etc.) aus Polyethylen (Nieder- und Hochdruck-PE) oder Polypropylen ist nach wie vor sehr aufwendig und teuer, mit der Folge, dass auch derzeit noch solche eigentlich sauberen und verwertbaren Kunststoffabfälle regelmäßig in die Müllverbrennungsanlage gelangen und diese können so sinnvoll verwendet werden. Es kann aber auch aus biologisch abbaubarem Kunststoff hergestellt werden - bspw. wenn erwünscht ist, dass das Dickenwachstum von darin angesiedelten Pflanzen nicht begrenzt ist und die Haltefunktion des Bauteils nur einen gewissen Zeitraum, bis Pflanzen Fuß gefasst haben, notwendig oder erwünscht ist.Als Material des Bauteils oder Verbindungselements wird bei einer Ausführungsform erfindungsgemäß ein Kunststoff aus thermoplastisch formbaren Kunststoffabfall aufweisenden Kunststoffmischungen verwendet, der bevorzugt in eine Form spritzgießbar oder giessbar ist. Es handelt sich hierbei z.B. regelmäßig um Abfälle, die vor allem granuliertes oder gemahlenes Polyethylen (Nieder- und Hochdruck-PE) oder Polypropylen, auf. Diese können bspw. nicht mehr verblasen werden, sind aber dennoch noch spritz- bzw. gießfähig - aber auch Polyamide, Polyurethane oder Polyester können erfolgreich eingemischt werden. Die Kunststoffmasse kann ferner einen Anteil an Holz- oder Pappabfällen oder porösen Zuschlagstoffen aufweisen, welche bspw. dazu geeignet sind, das Gewicht des erfindungsgemässen Bauteils spürbar zu vermindern. Das Bauteil kann aber auch herkömmlich gegossen werden.

Bei einer bevorzugten Ausführungsform besteht der Kunststoff aus vorab zerkleinerten und anschließend eingeschmolzenen Kunststoffabfällen, die in eine entsprechende Form giessbar sind. Das erfindungsgemässe Bauteil lässt sich aufgrund dessen besonderer Form spritztechnisch einfach herstellen. Zweckmäßigerweise kann die Kunststoffmasse auch einen zusätzlichen Anteil an Füllmaterialien, wie Papier oder Pappabfälle, aufweisen. Der Kunststoff kann ausgewählt sein aus der Gruppe bestehend aus: unverarbeitetem Kunststoff; recyceltem Kunststoff, faserverstärktem Kunststoff, gefüllten Kunststoffen, biologisch abbaubaren Kunststoffen.

Erfindungsgemäß laufen beide Seiten-Wände der hohlen Außenwand vom Boden zu dieser verbindenden Trittfläche trapezoid zusammen , so dass die Bauteile ggf. leicht übereinander gestapelt werden können und hohe Elastizität des Bauteils bei Ausdehnung in der Wärme gegeben ist (s. Fig. 16). Durch die trapezoide Form ist Stapelbarkeit der Mehrzweckbauteile gegeben, was zu erheblich verringerten Transportaufwand führt, da die Bauteile sehr dicht gepackt versendet werden können. Die Ausführungsform mit trapezoiden hohlen Außenwänden dient demzufolge auch der Transportoptimierung.

Die Ausführungsform der Erfindung, bei welcher sich die hohle Außenwand von unten nach oben verjüngt, führt auch zu einer spritzgiesstechnischen bzw. formtechnischen Vereinfachung, denn das Kunststoff-Mehrzweckbauteil lässt sich leichter aus der Gussform entnehmen.

Wird das Mehrzweckbauteil als Bestandteil einer Strassengrabenbefestigung oder in unebenem Gelände verwendet, ist es zweckmäßig, in mindestens einer Durchführung eine Halterung miteinzuformen, die eine Durchführung aufweist, in die ein Erdanker oder dgl. eingebracht werden kann.

Um zu vermeiden, dass bei Einsatz des Bauteils als begehbares Element mit Füllungen durch eingefüllte Steine oder Kacheln oder Erde oder Schotter bei Belastung ein unbeabsichtigtes Verschieben der Füllkörper eintritt, kann zweckmäßigerweise vorgesehen sein, dass das Bauteil über die gesamte Fläche verlaufende Innenwände aufweist, die kleinere Aufnahmen bilden und in denen mindestens eine Entwässerungsöffnung vorgesehen ist.

Durch die Verwendung von Kunststoffen wird eine hohe mechanische Stabilität sowie Säurebeständigkeit und Witterungsbeständigkeit des Bauteils gewährleistet, wobei ein optischer und haptischer Eindruck eines in einem Bett verlegten Pflasters/Kacheln entsteht.

Die Ausbildung des Außenrahmens als sich trapezoid verjüngende Doppelwand ermöglicht einen elastischen Ausgleich von durch Temperaturschwankungen oder auch Belastung bedingten Ausdehnungen einer Bauteilanordnung aus mehreren miteinander verbundenen Bauteile und dadurch eine Vermeidung von nachteiligen Beeinträchtigungen derselben.

Durch diese besondere, konvergierende Form der Außenrahmenwände werden auch ungünstige Kräfteverhältnisse während der Belastung der Bauteilanordnung vermieden, d. h. es entsteht kein unerwünschter Druck der Bauteilanordnung bei Belastung.

Um zu vemeiden, dass die Füllkörper entfernt werden oder sich von dem KunststoffBauteil lösen, können die Doppelwand-Außenrahmenteilen so ausgestaltet sein, dass deren Innenrahmenwand mindestens eine Rasteinrichtung für im Bauteil eingebrachte, entsprechend ausgeformte Trittplatten aufweist. Nach Einbringen des Füllkörpers - bspw. eines Pflastersteins oder eines Leuchtsteins - verriegelt sich dieser im Kunststoffgitter und kann sich weder aufwölben, noch leicht entfernt werden (Fig.21).

Erfindungsgemäß ist somit eine einfache, ggf. austauschbare Befüllung der Bauteilanordnung, wie mit standardisierten Formsteinen oder Pflastersteienen, sichergestellt.

Nachfolgend wird die Erfindung anhand bevorzugter Ausführungsformen, auf welche sie aber keinesfalls eingeschränkt ist, sowie der Zeichnungsfiguren näher erläutert. Es zeigen:
Fig. 1 : eine Ausgestaltung eines Bauteils in der Draufsicht;
Fig. 2: eine Bodenansicht des Bauteils nach Fig. 1
Fig. 3 : eine perspektivische Darstellung des Bauteils von schräg oben;
Fig. 4: ein Detail eines Querschnitts durch den Doppelwandbereich eines MehrzweckBauteils mit angeformtem Hakenteil und Auflagerahmen
Fig. 5: eine Draufsicht auf eine weitere Ausgestaltung des Bauteils ohne Innenwände, gefüllt mit einem runden Stein;
Fig. 6 eine Draufsicht auf eine weitere Ausgestaltung des Bauteils mit zwei Innenwänden - wie in Fig. 3 dargestellt, gefüllt mit 4 Pflastersteinen
Fig. 7 eine Draufsicht auf eine weitere Ausgestaltung des Bauteils ohne Innenwände, gefüllt mit 4 runden Steinen;
Fig. 8 eine Draufsicht auf eine weitere Ausgestaltung des Bauteils mit diagonal verlaufenden Innenwänden, gefüllt mit dreiecksförmigen Steinen;
Fig. 9 eine Draufsicht auf eine weitere Ausgestaltung des Bauteils mit zwei Innenwänden, gefüllt mit zwei Pflastersteinen und zwei Pflanzgefäßen;
Fig. 10 eine Draufsicht auf eine weitere Ausgestaltung des Bauteils ohne Innenwände, gefüllt mit einem markierten Pflasterstein;
Fig.11 einen Querschnitt durch einen Außenrahmenbereich von zwei übereinander gestapelten Mehrzweck-Bauteilen;
Fig. 12 einen Querschnitt durch gestapelte Mehrzweck-Bauteile mit trapezoid zulaufenden Seitenwänden entlang der Linie A-A'
Fig. 13 eine perspektivische Ansicht einer weiteren Ausführungsform eines erfindungsgemäßen Bauteils in perspektivischer Ansicht von schräg oben;
Fig. 14 einen Querschnitt entlang der Linie A-A' der Fig. 15;
Fig. 15 eine Draufsicht auf zwei nebeneinander zum Verbinden angeordneten Bauteilen der Ausführungsform der Fig. 11;
Fig. 16 einen Querschnitt durch übereinandergestapelte Kunststoff-Mehrzweckbauteile;
Fig. 17 eine flächige Verlegung von Kunststoffformteilen, die an ihren Außenseiten zwei aneinandergrenzende Doppelwand-Außenrahmenteile und zwei Randbereiche ohne Doppelwand-Außenrahmenteile aufweisen;
Fig. 18 eine weitere flächige Verlegung von kunststoffformteilen, deren Doppelwand-Außenteile zum Anschluß an Doppelwand-Außenteile weiterer Elemente gehrungsartig abgeschrägt sind;
Fig. 19 eine weitere Ausführungsform verlegter Kunststoffformteile, wobei sich solche mit umlaufendem Doppelwand-Außenrahmenteilen mit solchen mit parallel zueinander verlaufenden Doppelwandrahmenteilen abwechseln;
Fig. 20 schematisch eine Fläche aus mit umlaufenden Doppelwand-Rahmenteilen ausgebildeten Mehrzweckbauteilen; und
Fig. 21 ein Detail eines Schnitts durch eine Doppelwand mit einer Rasteinrichtung; für einen Füllkörper.

Nachfolgend bezeichnen identische Bezugsziffern identische Merkmale in den einzelnen Figuren. Der Übersichtlichkeit halber wurden Merkmale, die in den einzelnen Figuren mehrfach vorkommen, lediglich einmal mit der betreffenden Bezugsziffer gekennzeichnet.

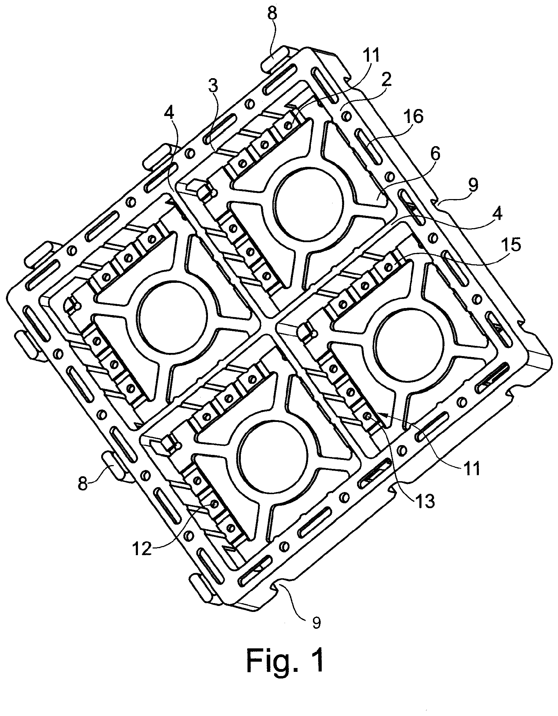

Die Ausführungsformen der Figuren 1-4 und 13-15 zeigen keine trapezoid verjüngende Doppelwand und sind somit nicht erfindungsgemäß. Bezugsziffer 1 in Fig. 1 beschreibt eine Ausführungsform des Bauteils in seiner Gesamtheit. Das Bauteil umfasst einen hohlen Aussenrahmen 2, der quadratisch sein kann. Dieser hohle Aussenrahmen 2 aus Außenrahmeninnenwand 14, Außenrahmenaußenwand 5 und Trittfläche 15 steht bei dieser Ausführungsform an seiner Innenseite mit mehreren Innenwänden 3 (bspw. Querwänden sowie Längswänden) in Verbindung, die das Bauteil 1 in einzelne Zellen aufteilen. Als Kupplungseinrichtung werden hier Durchführungen 9 in der Nähe der Querwände/Längswände 3 in der hohlen Au-βenrahmenaußenwand 5 eingesetzt. An den Innenwänden 3, 14 sind innere Auflagerahmen 11 für Füllkörper vorgesehen. In den so gebildeten Feldern können als Füllkörper bspw. herkömmliche Pflastersteine, Formsteine jeglicher Art, Holzpflastersteine, Gummiplatten, Pflanzgefäße bzw. bepflanzte Gefäße etc. aufgenommen werden.

An den in Fig. 1 linken und oberen Aussenrahmen-Seitenflächen 5 befinden sich als Kupplungseinrichtungen Hakenteile 8. Durchführungen 9 in den Außenwänden 5 des nächsten Bauteils sind lagegleich zu den Hakenteilen 8 vorgesehen, die im Fall der Ausgestaltung gemäß Fig. 1 zur Unterseite hin offen ausgebildet sind. Diese Konstruktion gewährleistet, dass zwei Bauteile 1 an nebeneinanderliegenden Außenseitenflächen 5 am jeweiligen Hakenteil 8 und der Durchführung 9 zusammengesteckt werden können. Die Anordnung der einzelnen Durchführungen wird aus Fig. 1 deutlich.

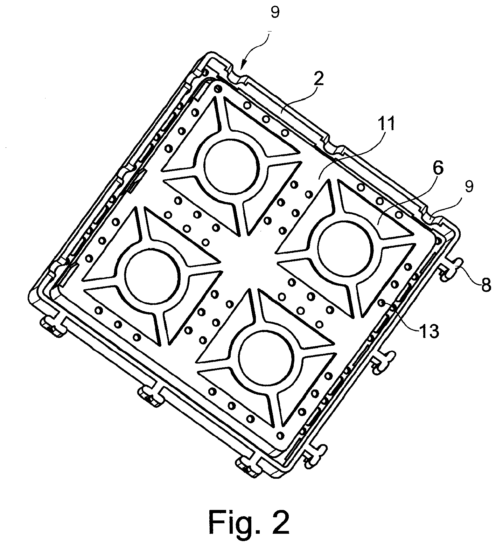

Fig. 2 zeigt eine Bodenansicht des Bauteils nach Fig. 1. Dort sind die Durchführungen 9 von der Unterseite her sowie die zellenartigen Durchführungen 6 im Boden des Bauteils 1 offen. Auch in den Auflagerahmen 11 sind Durchgangs-Öffnungen 12 zur besseren Entwässerung vorgesehen, die - wie aus Fig. 1 ersichtlich - bei dieser Ausführungsform in erhabene Bereiche 12 des Auflagerahmens 11 eingebracht sind. Zur Entwässerung sind auch rippenartige Abstandhalter 3 für die eingebrachten Formkörper auf den Wänden 14, 4 im Rahmen vorgesehen. Dadurch wird ein direktes Anliegen der Formkörper an den Innenwänden des Bauteils 1 vermieden und ein guter Flüssigkeitsablauf entlang der Wände ermöglicht. Es ist besonders bevorzugt, dass Entwässerungsöffnungen des Bauteils mit Wällen versehen sind, welche einerseits das Ausrutschen auf den Bauteilen vermeiden und andererseits das Zusetzen der Entwässerungsöffnungen hindern.

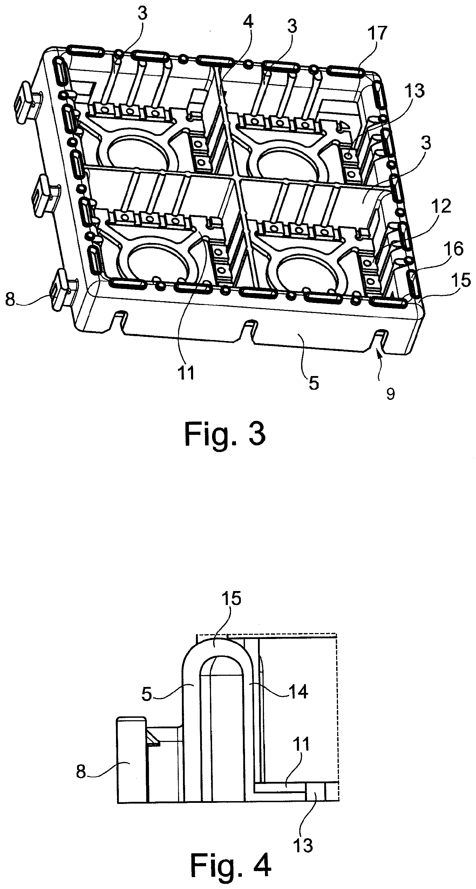

Fig. 3 zeigt die Ausgestaltung der Fig. 1 in seitlich-perspektivischer Ansicht, wobei deutlich eine Ausgestaltung der Außenrahmeninnenwand 14 erkennbar ist, die im Bereich der Durchführungen 9 für die Haken 8 Aussparungen aufweist, in denen sich der Hakenstirnbereich befindet. Gut sind die Durchführungen 9 in der Außenrahmenau-βenwand 5 ersichtlich, durch welche Haken 8 eines benachbarten Bauteils 1 eingehakt werden können.

Fig. 4 erläutert im Detail einen Querschnitt durch den Doppelwandbereich eines Bauteils 1 mit angeformtem Haken 8 und Auflagerahmen 11, wobei ersichtlich ist, dass eine Öffnung 13 im Auflagerahmen 11 vorgesehen ist und die hohle AußenrahmenDoppelwand 2 in etwa die Breite eines Hakenteils 8 hat.

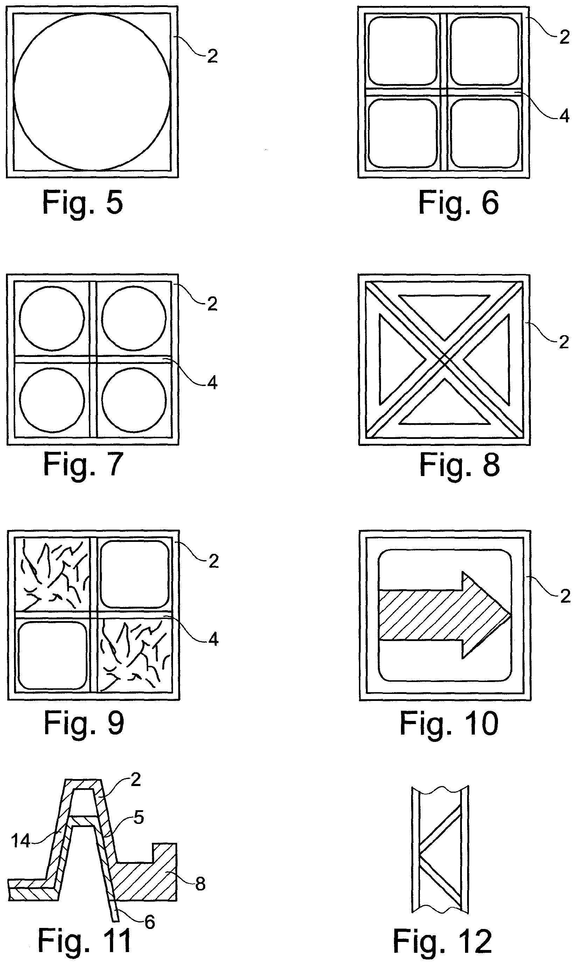

Fig. 5 zeigt schematisch eine Draufsicht auf eine weitere Ausgestaltung des erfindungsgemäßen Bauteils ohne Innenwände, bei der die Verbindungselemente nicht dargestellt sind, gefüllt mit einem runden Stein ohne Innenwände. Diese Ausgestaltung kann eingesetzt werden, falls der Kunde dies wünscht - auch hier ist die einfache Verlegbarkeit und Entwässerung gegeben. in Fig. 6 ist eine schematische Draufsicht auf eine Ausgestaltung des erfindungsgemäßen Bauteils mit Innenwänden, gefüllt mit üblichen Pflastersteinen.

Fig. 7 stellt schematisch eine Draufsicht auf eine weitere Ausgestaltung des erfindungsgemäßen Bauteils mit Innenwänden 4 dar, gefüllt mit runden Steinen und Fig. 8 eine Draufsicht auf eine weitere Ausgestaltung des erfindungsgemäßen Bauteils mit diagonal verlaufenden Innenwänden, gefüllt mit dreieckigen Formkörpern.

Fig. 9 zeigt eine schematische Draufsicht auf eine weitere Ausgestaltung des erfindungsgemäßen Bauteils mit Innenwänden 4, teilweise gefüllt mit Steinen und teilweise mit Bepflanzung; Fig. 10 eine Draufsicht auf eine weitere Ausgestaltung des erfindungsgemäßen Bauteils 1 ohne Innenwände bzw. mit stark höhenmäßig verringerten Innenwänden 4 mit einem markierten Trittstein.

Fig. 11 stellt ein Detail eines Längsschnitts durch eine Außenrahmendoppelwand 2 mit elastischen Verstrebungen dar, welche die Ausdehnung der Doppelwand 2 begrenzen können; und Fig. 12 einen Querschnitt durch einen Außenrahmenbereich von zwei übereinander gestapelten Bauteilen 1; wobei ersichtlich ist, dass sich die erfindungsgemäßen Bauteile sehr gut stapeln lassen und derart ein erheblich verbessertes Transportverhalten durch die bessere Nestbarkeit erzielt wird.

Fig.12 stellt ein Detail eines Schnittes durch einen Doppelwand-Außenrahmen 2 dar, in dem Verstrebungen zur Begrenzung dessen Dehnungsvermögens vorgesehen sind. Dies kann insbesondere dann notwendig werden, falls ein elastisches Kunststoffmaterial aufgrund ungünstiger Umgebungsbedingungen (z.B. extrem hohe Temperaturen) zu weit gedehnt werden kann oder bei tiefen Temperaturen überdehnt brechen könnte. Auch bei starken Belastungen der Bauteile 1 in Schrägen kann es angezeigt sein, die Wandausdehnbarkeit zu begrenzen.

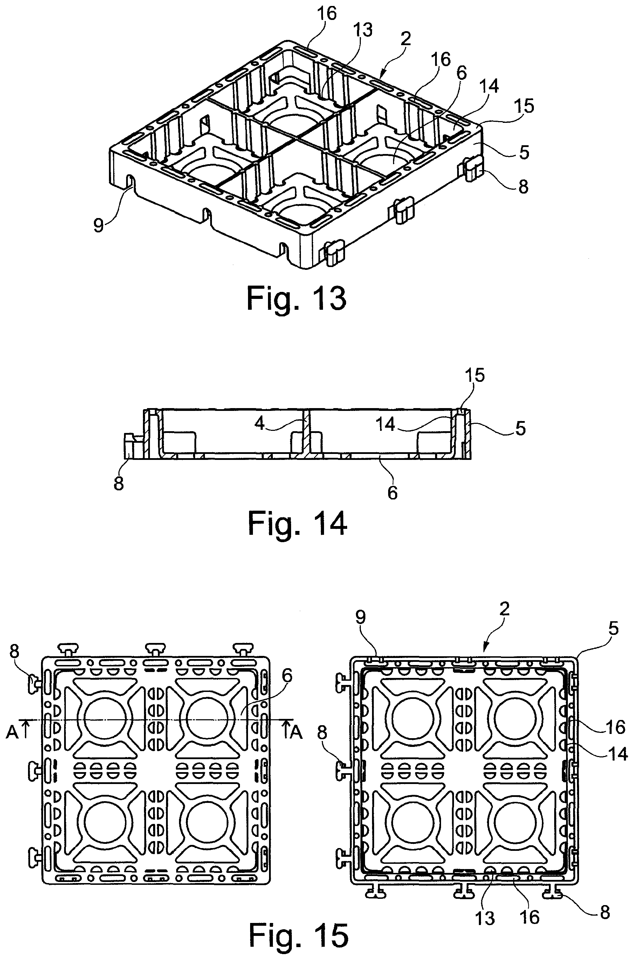

Fig. 13 zeigt nun eine perspektivische Ansicht einer weiteren Ausführungsform eines erfindungsgemäßen Bauteils von schräg oben, wobei die Öffnungen 13 in den Auflagerahmen 11 an den Außenrahmeninnenwänden 14 liegen und ohne Erhebungen für die Öffnungen 13 ausgestaltet sind.

Fig. 14 zeigt einen Querschnitt entlang der Linie A-A' der Fig. 15 durch ein Bauteil der Ausführungsform der Fig. 13; deutlich ist zu erkennen, wie die hohlen Außenwände 2 beschaffen sind, so dass sie Hakenelemente 8 in sich aufnehmen können. In Fig. 15 ist eine Draufsicht auf zwei nebeneinander zum Verbinden angeordnete Bauteile 1 der Ausführungsform der Fig. 13 und Fig. 16 gezeigt.

Fig. 16 erläutert die Nestbarkeit der Bauteile 1 in einem Querschnitt durch gestapelte Bauteile 1 mit trapezoid zulaufenden Seitenwänden 5, 14 entlang der Linie A-A' der Fig. 13. Deutlich ist ersichtlich, wie die Doppelwandrahmen 2 bis auf die Höhe des Hakenteils 8 ineinandergreifen und so das Lagern; Versenden und Handhaben der Bauteile 1 stark vereinfachen. Durch diese vorteilhafte Nestbarkeit beider Teile wird das Raumbedürfnis der Bauteile beim Transport erheblich verringer. Dies ist insbesondere auch deshalb umweltfreundlich und effizient, da so viele Transportfahrten vermieden werden können.

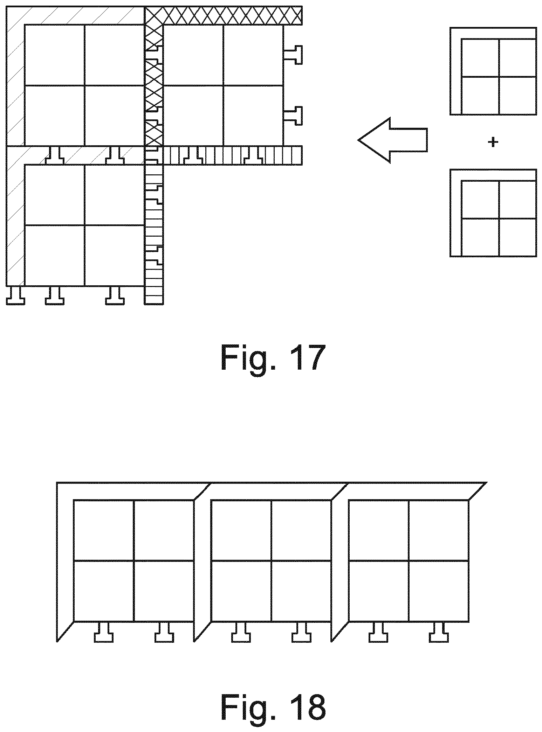

Fig. 17 zeigt schematisch mehrere aneinandergekoppelte Mehrzweckbauteile, die jeweils nur ein winkelartiges Doppelrahmenaußenteil aufweisen. Dadurch entsteht beim Aneinanderkoppeln der Mehrzweckbauteile 1 kein doppelter Doppelrahmen, sondern ein einfacher Doppelrahmen.

Fig. 18 stellt schematisch eine weitere Ausführungsform von Mehrzweckbauteilen mit nicht umlaufender Doppelaußenwand dar. Winkelartige Doppelrahmenaußenteile enden bei dieser Ausführungsform in schrägen Endflächen. Dadurch sind andere Befestigungsmöglichkeiten der Bauteile aneinander gegeben, als bei der Ausführungsform der Fig. 17 sowie eine größere gemeinsame Berührungsfläche der Doppelwandendflächen.

Fig. 19 zeigt eine Anordnung verschiedener, miteinander zu einer Fläche gekoppelter Mehrzweckbauteile. Einerseits werden Mehrzweckbauteile mit umlaufendem Doppelwandrahmen eingesetzt, andererseits solche, die nur zwei gegenüberliegende Doppelwände aufweisen, die an Doppelwandflächen benachbarter Mehrzweckbauteile ankoppeln. Diese Ausführungsform verwendet weniger Kunststoffmaterial und führt zu einem hohen Anteil an Füllkörperbelegung der durch die Mehrzweckbauteile bedeckten Fläche.

Fig. 20 erläutert, wie eine Fläche durch aneinandergekoppelte Mehrzweckbauteile 1 mit umlaufendem Doppelaußenrahmen bedeckt ist. Deutlich erkennt man die aneinanderliegenden Doppelaußenrahmenwände der Teile.

Fig. 21 zeigt ein Detail einer Ausführungsform eines Doppelaußenrahmens mit einer Rasteinrichtung - hier schematisch als Vertiefung18 in der Innenwand eines Kunststoffdoppelaußenrahmenteils dargestellt. In diese Vertiefung greift bei der Installation des Mehrzweckbauteils eine Erhebung des Füllkörpers 20 ein und sichert diesen gegen Kippen, Herausziehen oder Diebstahl.

Es ist darauf hinzuweisen, dass die trapezoide Querschnittsform und Elastizität der Außenwände zwar für viele Fälle vorteilhaft ist, aber dass bereits aufgrund der Doppelwände 2 und der darin aufgenommenen Haken 8 ausreichend Spiel vorhanden sein kann, um Dehnungsänderungen der Bauteile aufzunehmen. Dies hängt von den Umständen des Einzelfalls, des verwendeten Materials sowie den Umgebungsbedingungen, unter denen die Bauteile verlegt werden, ab.

Das Mehrzweck-Bauteil 1 kann als Bestandteil des Bodenbelags bspw. eines Stalls, einer öffentlichen Fläche, von Wegen - insbesondere auch Wegen für Golfcarts oder Reitplätze oder eines Nässe abführenden Untergrundes - verwendet werden, denn aufgrund der offenen wasserführenden Öffnungen in den Bauteilen können Flüssigkeiten schnell abfließen.

Zur Verlegung der Mehrzweckbauteile gemäss Fig. 1 werden benachbarte Bauteile 1 zur Verbindung mehrerer Bauteile zu einem Bauteilverbund mit dem Hakenteil 8 von der offenen Seite der Durchführung 9 mit gewisser Kraftanstrengung zusammengeschoben, wobei die Hakenteile 8 in die Öffnungen 9 in den Rahmen-Außenwänden 5 mit ihrem vorderen Ende eingreifen, die Verriegelung zweier benachbarter Bauteile damit herstellen und diese nur mit erhöhtem Kraftaufwand wieder entriegelt werden können.

Erfindungsgemäss werden die Bauteile bspw. zur Befestigung einer Fläche, beispielsweise eines Parkplatzes, einer Garageneinfahrt oder einer sonstigen mit begehbaren Bauteilen auszulegenden Fläche eingesetzt. Die Bauteile sind zu diesem Zweck im Verbund eindimensional auszulegen und werden anschließend mit Steinen oder Kacheln od. dgl. gefüllt. Die erfindungsgemäßen Bauteile können zu transportfähigen Stapeln zusammengestellt werden, wobei die Doppelwände ineinandergreifen und derart die Bauteile gut gestapelt, in dieser Weise transportiert und vor Ort durch Verbindung als Bauteilverbunde ausgelegt werden können.

Die Bauteile eignen sich aber auch zum Verlegen in Paddocks, auf Außenanlagen von Reitplätzen, Fußball- und sonstigen Sportplätzen, Aufgrund der elastisch komprimierbaren Doppelwände können die Seitenwände auch hohen Dehnungen - bspw. bei verschiedenen thermischen Ausdehnungen entsprechen. Dabei ist es für einige Anwendungen bevorzugt, wenn geschlossene Behälter vorliegen, welche als Flüssigkeitsreservoir dienen können und das Austrocknen sowie die unerwünschte Staubbildung dadurch länger vermeiden. Bei der (temporären) Auslegung von transportablen/ temporären Bauten wie Ställen od. dgl., wo ein schneller Abfluss von Urin oder anderen Flüssigkeiten erwünscht ist, sind die Zellen unten offen ausgebildet. In jedem Falle ist die überraschende Elastizität des Bauteils ein Fortschritt und lässt dem damit belegten Untergrund auch ein natürlicheres Trittgefühl. Normalerweise gibt Pflaster nicht nach - dies kann nun durch das erfindungsgemässe Bauteil bis zu einem gewissen Grad erreicht werden.

Auch die Innenwände 4 der Mehrzweckbauteile 1 verjüngen sich bevorzugt von der Standfläche nach oben. Hierdurch wird zum einen ein problemloses Auffüllen der Mehrzweck-Bauteile 1 mit Formteilen gewährleistet. Darüber hinaus wird ein Anheben eines z.B. mit Steinen befüllten Bauteilverbundes aufgrund von ungünstigen Kräfteverhältnissen während der Belastung bei dieser Ausgestaltung vermieden, d.h., es entsteht bei Belastung kein unerwünschter Hebedruck. Die Auflageflächen sind im Vergleich mit bekannten Bauteilen 1 vergrößert und der Bauteilverbund lässt sich einfacher befüllen. Die besondere Form des Auflagerahmens sowie der hohlen Außenwände bieten darüber hinaus den Vorteil, dass mit Formteilen versehene Bauteile einfacher zu handhaben sind und ggf. die Bepflanzungseinheit innerhalb des Bauteilverbundes bzw. der Bauteilanordnung nicht ohne weiteres hindurch fallen kann. Die Herstellung dieser besonderen Bauteile kann so erfolgen, dass das Bauteil in seiner gesamten Tiefe in einer Formhälfte hergestellt wird und die weitere Formhälfte lediglich den Abschlussdeckel bildet.

Obwohl die Erfindung anhand einer bevorzugten Ausführungsform eines Bauteils erläutert wurde, ist sie keineswegs auf diese beschränkt, sondern durch das, was der Fachmann bei sachverständiger Lektüre der Ansprüche unter Bezugnahme auf die Beschreibung und die Figuren mitliest.

### BEZUGSZEICHENLISTE

- 1: Mehrzweckbauteil-Außenrahmen
- 2: Doppelwand-Außenrahmen
- 3: Erhebungen auf den Innenwänden 4, 14
- 4: Innenwand
- 5: Außenrahmen wand von 2
- 6: Durchführungen im Bauteilboden
- 7: Hakenteil
- 8: Durchführung in Außenrahmenwand 5
- 11: Auflagebodenrahmen
- 12: Erhebung auf 11
- 13: Durchgangsöffnung in 11
- 14: Innenwand von 2
- 15: Trittfläche von 2
- 16: Öffnungen in 15
- 17: Erhebungen um 16
- 18: Rasteinrichtung an der Innenwand eines Doppelwand-Außenrahmens
- 19: Füllkörper mit Rasteinrichtung

## Patentansprüche

1. Kunststoff-Mehrzweckbauteil (1) zur Verwendung als Bestandteil eines Bodenbelags und geeignet als mit Füllkörpern gefülltes Bauteil eines aus mehreren Mehrzweckbauteilen bestehenden flächigen Verbundes, mit
- einem Außenrahmen (2) aufweisend hohle Doppelwand-Außenrahmenteile (2) mit einer Außenrahmenwand (5), einer Innenrahmenwand (14) und einer diese verbindenden Trittfläche (15);
- Kupplungseinrichtungen (6,8) zur Verbindung nebeneinanderliegender Mehrzweckbauteile (1) an Außenflächen der Doppelwand-Außenrahmenteile (2);
- inneren Auflagebodenrahmen (11) für Füllkörper,
wobei mindestens eine Kupplungseinrichtung (8,9) als mindestens ein Hakenteil (8) und mindestens eine an der Unterseite offene Durchführung (9) ausgebildet ist,
wobei zumindest die Unterseite des Hakenteils (8) mit der Unterseite des Außenrahmens (2) bündig abschließt;
wobei die Innenrahmenwand (14) und die Außenrahmenwand (5) sich über die gesamte Höhe des Mehrzweckbauteils (1) erstrecken; und wobei
der mindestens eine Hakenteil (8) so ausgelegt ist, dass der Hakenteil (8) bei zusammengekoppelten Kunststoffformteilen mehrerer aneinandergekoppelter Mehrzweckbauteilen innerhalb eines hohlen Doppelwand-Außenrahmenteils (2) endet, **dadurch gekennzeichnet, dass** die Doppelwand-Außenrahmenteile elastisch komprimier- und dehnbar sind, und
die Innenrahmenwand (14) und die Außenrahmenwand (5) der hohlen Doppelwand-Außenrahmenteile (2) in Richtung der Trittfläche (15) konisch zulaufen.

2. Mehrzweckbauteil (1) nach Anspruch 1, **dadurch gekennzeichnet, dass** das Mehrzweckbauteil (1) Innnenwände (4) aufweist, die das Innere des Außenrahmens (2) in ein Muster von zellenartigen Durchführungen (6) aufteilen.

3. Mehrzweckbauteil nach einem der vorangehenden Ansprüche, **dadurch gekennzeichnet, dass** Abstandshaltererhebungen (3) auf den Innenrahmenwänden (14) und/oder den Innenwänden (4) ausgeformt sind, die Entwässerung entlang eines eingebrachten Füllkörpers begünstigen.

4. Mehrzweckbauteil nach den Ansprüchen 1 - 3, **dadurch gekennzeichnet, dass** die Trittfläche (15) des Außenrahmens (2) und der Auflagebodenrahmen (11) Entwässerungsöffnungen (13, 16) zum besseren Flüssigkeitsdurchtritt aufweisen.

5. Mehrzweckbauteil nach einem der vorangehenden Ansprüche, **dadurch gekennzeichnet, dass** die Doppelwand-Außenrahmenteile (2) Verbindungsstreben zwischen Außenrahmenwand (5) und Innenrahmenwand (14) aufweisen.

6. Mehrzweckbauteil nach einem der Ansprüche 1 - 5, **dadurch gekennzeichnet, dass** das Mehrzweckbauteil (1) im wesentlichen aus thermoplastischem Kunststoff, ausgewählt aus der Gruppe bestehend aus: unverarbeitetem Kunststoff; recyceltem Kunststoff, faserverstärktem Kunststoff, gefüllten Kunststoffen, biologisch abbaubaren Kunststoffen, und Mischungen und Kombinationen derselben, besteht.

7. Mehrzweckbauteil nach einem der vorangehenden Ansprüche, **dadurch gekennzeichnet, dass** es auf mindestens einer Oberfläche Erhebungen (12,17), aufweist

8. Mehrzweckbauteil nach Anspruch 7 wenn abhängig von Anspruch 4, **dadurch gekennzeichnet, dass** die Erhebungen (12,17) um die Entwässerungs-Öffnungen, (13,16) verlaufen.

9. Mehrzweckbauteil nach einem der vorangehenden Ansprüche, **dadurch gekennzeichnet, dass** die Innenrahmenwand (14) mindestens eine Rasteinrichtung (18) für im Mehrzweckbauteil eingebrachte Trittplatten (20) aufweist.

## Claims

1. Plastic multi-purpose element (1) for use as a component of a floor covering and suitable as a element of a flat composite filled with filling bodies having
a plurality of multi-purpose elements
an outer frame (2) having hollow double-wall outer frame parts with an outer frame wall, an inner frame wall and a tread surface (15)
coupling devices (6.8) for connecting adjacent multi-purpose elements (1) to outer surfaces of the double-wall outer frame parts (2):
inner supporting base frame (11) for filling bodies,
wherein at least one coupling device (8; 9) is designed as at least one hook part (8) and at least one leadthrough (9) which is open on the underside,
wherein at least the underside of the hook part (8) terminates flush with the underside of the outer frame (2),
wherein the inner frame wall (14) and the outer frame wall (5) extend over the entire height of the multi-purpose structure (1); and
wherein the at least one hook part (8) is designed in such a way that the hook part (8) ends within a hollow double-wall outer frame part (2) when the multi-purpose elements are coupled together,
**characterized in that**
the double-wall outer frame parts can be elastically compressed and stretched, and
the inner frame wall (14) and the outer frame wall (5) of the hollow double-wall outer frame parts taper conically in the direction of the tread surface (15).

2. Multipurpose element (1) according to claim 1, **characterized in that** the multipurpose element (1) has inner walls (4) which divide the interior of the outer frame (2) into a pattern of cell-like leadthroughs (6).

3. Multipurpose element (1) according to one of the preceding claims, **characterized in that** spacer elevations (3) are formed on the inner frame walls (14) and/or the inner walls (4), which promote drainage along an introduced filling body.

4. Multipurpose element (1) according to claims 1 to 3, **characterized in that** the tread surface (15) of the outer frame (2) and the bearing base frames (11) have drainage openings (13, 16) for better passage of liquid.

5. Multipurpose element (1) according to one of the preceding claims, **characterized in that** the double-wall outer frame parts (2) have connecting struts between the outer frame wall and the inner frame wall.

6. Multipurpose element according to one of Claims 1 to 5, **characterized in that** the multipurpose element (1) consists essentially of thermoplastic material selected from the group consisting of: unprocessed plastic; recycled plastic, fiber-reinforced plastic, filled plastics, biodegradable plastics, and mixtures and combinations thereof.

7. Multipurpose element according to one of the preceding claims, **characterized in that** it has elevations (12,17) on at least one surface.

8. Multipurpose element according to Claim 7, **characterized in that** the elevations (12, 17) run around the drainage openings (13, 16).

9. Multipurpose element according to one of the preceding claims, **characterized in that** the inner frame wall (14) has at least one latching mechanism for paving blocks (20) introduced into the multipurpose element.

## Revendications

1. Element multi-usage (1) pour pavages en plastique destiné à être utilisé en tant que element d'un revêtement de sol et approprié en tant que l'element rempli de corps de remplissage d'un composite plat ayant une pluralité des elements multi-usages, ayant
un cadre externe (2) ayant des parties de cadre externe à double paroi creuse avec une paroi de cadre externe, une paroi de cadre interne et une surface de bande de roulement (15)
des dispositifs de couplage (6,8) pour relier des composants à usages multiples adjacents (1) à des surfaces externes des parties de cadre externe à double paroi (2) :
un cadre de base de support interne (11) pour des corps de remplissage,
au moins un dispositif d'accouplement (8 ,9) réalisé sous la forme d'au moins une partie crochet (8) et d'au moins un passage ouvert (9) sur la face inférieure,
au moins la face inférieure (14) de la partie crochet (8) se termine à fleur de la face inférieure du cadre externe (2),
la paroi de cadre interne et la paroi de cadre externe s'étendant sur toute la hauteur de l'element multi-usage (1); et
la ou les parties de crochet (8) étant conçues de telle sorte que la partie de crochet (8) se termine à l'intérieur d'une partie de cadre externe (2) à double paroi creuse lorsque les parties de elementà usages multiples sont couplées l'une à l'autre,
**caractérisé en ce que**
les parties de cadre externe à double paroi peuvent être élastiquement comprimées et étirées, et
la paroi de cadre interne (14) et la paroi de cadre externe (5) des parties de cadre externe à double paroi creuse (2) s'effilent de manière conique dans la direction de la surface de bande de roulement (15).

2. Element multi-usage (1) selon revendication 1, characterise en ce qu''il présente des parois intérieures (4) qui divisent l'intérieur du cadre extérieur (2) en un motif de traversées en forme de cellules (6).

3. Element multi-usage selon l'une des revendications précédentes, **caractérisé en ce que** des saillies d'espacement (3) sont formées sur les parois de cadre internes (14) et/ou les parois internes (4), qui favorisent le drainage le long d'un corps de remplissage introduit.

4. Element multi-usage (1) selon les revendications 1 à 3, **caractérisé en ce que** la surface de roulement (15) du cadre externe (2) et les cadres de base de supports interne (11) ont des ouvertures de drainage (13, 16) pour un meilleur passage de liquide.

5. Element multi-usage (1) selon l'une des revendications précédentes, **caractérisé en ce que** les parties de cadre externe à double paroi (2) ont des entretoises de liaison entre la paroi de cadre externe et la paroi de cadre interne.

6. Element multi-usage (1) selon l'une des revendications 1 à 5, **caractérisé en ce que** le element multi-usage (1) est constitué essentiellement d'un matériau thermoplastique choisi dans le groupe constitué par : le plastique non traité; le plastique recyclé, le plastique renforcé par des fibres, les plastiques chargés, les plastiques biodégradables, et leurs mélanges et leurs combinaisons.

7. Element multi-usage (1) selon l'une des revendications précédentes, **caractérisé en ce qu'**il présente des élévations (12,17) sur au moins une surface

8. Element multi-usage selon la revendication 7, **caractérisé en ce que** les élévations (12, 17) s'étendent autour des ouvertures de drainage (13,16).

9. Element multi-usage selon l'une des revendications précédentes, **caractérisé en ce que** la paroi de cadre interne (14) comporte au moins un dispositif de verrouillage (18) pour des plaques de pas (20) introduites dans le elementmulti-usage.
